# EUROPÄISCHE PATENTSCHRIFT

(11) **EP 0 828 762 B1**
(45) Veröffentlichungstag und Bekanntmachung des Hinweises auf die Patenterteilung: **27.10.1999**
(21) Anmeldenummer: 96916141.3
(22) Anmeldetag: 21.05.1996
(51) Int. Cl.: C08F 26/00, C11D 3/37

(54) **WASSERLÖSLICHE COPOLYMERISATE, DIE VERNETZER EINPOLYMERISIERT ENTHALTEN, VERFAHREN ZU IHRER HERSTELLUNG UND IHRE VERWENDUNG**
WATER-SOLUBLE COPOLYMERS CONTAINING POLYMERIZED-IN CROSS-LINKING AGENTS, PROCESS FOR THEIR PREPARATION AND THEIR USE
COPOLYMERES HYDROSOLUBLES CONTENANT DES AGENTS RETICULANTS INCORPORES PAR POLYMERISATION, LEUR PROCEDE DE PREPARATION ET LEUR UTILISATION

(30) Priorität: 26.05.1995 DE 19519339
(43) Veröffentlichungstag der Anmeldung: 18.03.1998
(73) Patentinhaber: BASF AKTIENGESELLSCHAFT, 67056 Ludwigshafen (DE)
(72) Erfinder: SCHADE, Christian, D-67061 Ludwigshafen (DE); DETERING, Jürgen, D-67117 Limburgerhof (DE); STEIN, Stefan, D-55286 Wörrstadt (DE); BOECKH, Dieter, D-67117 Limburgerhof (DE); JÄGER, Hans-Ulrich, D-67434 Neustadt (DE)
(86) Internationale Anmeldenummer: EP9602179
(87) Internationale Veröffentlichungsnummer: WO9637525

(56) Entgegenhaltungen:
- EP-A- 0 709 411
- WO-A-95/15345
- DE-A- 3 209 224
- DE-A- 4 341 072

## Beschreibung

Die Erfindung betrifft wasserlösliche Copolymerisate, die einen Vernetzer einpolymerisiert enthalten, Verfahren zur Herstellung der Copolymerisate durch radikalisch initiierte Polymerisation von Vinylimidazolen, N-Vinylamiden, N-Vinyloxazolidon, N-Vinyltriazol oder Mischungen der genannten Monomeren, mit mindestens einem als Vernetzer wirkenden Monomeren mit mindestens 2 ethylenisch ungesättigten, nichtkonjugierten Doppelbindungen in Gegenwart von Polymerisationsreglern, Verfahren zur Herstellung der wasserlöslichen Copolymerisate und Verwendung der Copolymerisate als Zusatz zu Wasch- und Reinigungsmitteln.

Aus der DE-A-32 09 224 ist die Herstellung von unlöslichen, nur wenig quellbaren Polymerisaten von basischen Vinylheterocyclen und deren Copolymerisaten mit bis zu 30 Gew.-% copolymerisierbaren Monomeren und 0,1 bis 10 Gew.-% an Vernetzern in wäßrigem Medium in Abwesenheit von Initiatoren bekannt. Wie aus dem Vergleichsbeispiel dieser Veröffentlichung hervorgeht, erhalt man bei der Polymerisation von 100 Gew.-Teilen N-Vinylimidazol und 2 Gew.-Teilen N,N'-Methylenbisacrylamid in wäßriger Lösung unter Verwendung von Azoisobutyronitril als Polymerisationsinitiator steife Gele.

Bei der Copolymerisation von Vinylheterocyclen mit Vernetzern in waßriger Lösung in Gegenwart von Radikale bildenden Initiatoren tritt immer eine Gelbildung ein, vgl. das Vergleichsbeispiel der DE-A-40 00 978. Wie aus dieser Literaturstelle außerdem hervorgeht, erhält man durch Polymerisieren eines Vinylheterocyclus mit einem Vernetzer unter Ausschluß von Sauerstoff und von Polymerisationsinitiatoren wasserunlösliche Copolymerisate, die beispielsweise zur Entfernung von Schwermetallionen aus Wein einsetzbar sind.

Der vorliegenden Erfindung liegt die Aufgabe zugrunde, wasserlösliche Polymere auf Basis von Vinylheterocyclen oder Vinylamiden zur Verfügung zu stellen.

Die Aufgabe wird erfindungsgemäß gelöst mit wasserloslichen Copolymerisaten, die einen Vernetzer einpolymerisiert enthalten, und die erhältlich sind durch radikalisch initiierte Lösungspolymerisation von
a) 10 bis 99,5 Gew.-% 1-Vinylimidazol, Monomere der Formel 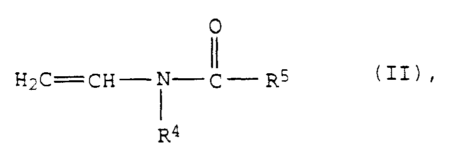 in der R⁴ und R⁵ gleich oder verschieden sind und für H, C₁-bis C₄-Alkyl stehen oder einen Ring aus 3 bis 5 Methylengruppen miteinander bilden,
   N-Vinyloxazolidon, N-Vinyltriazol, 4-Vinylpyridin-N-oxid oder Mischungen der genannten Monomeren,
b) 0 bis 89,5 Gew.-% anderen copolymerisierbaren monoethylenisch ungesättigten Monomeren und
c) 0,5 bis 30 Gew.-% mindestens eines als Vernetzer wirkenden Monomeren mit mindestens zwei ethylenisch ungesättigten, nichtkonjugierten Doppelbindungen
in Wasser und/oder polaren organischen Lösemitteln in Gegenwart von Polymerisationsreglern, wobei man auf 1 Gew.-Teil Vernetzer 0,1 bis 5 Gew.-Teile Polymerisationsregler einsetzt.

Gegenstand der Erfindung ist außerdem ein Verfahren zur Herstellung der wasserlöslichen Copolymerisate, das dadurch gekennzeichnet ist, daß man
a) 10 bis 99,5 Gew.-% 1-Vinylimidazol, Monomere der Formel 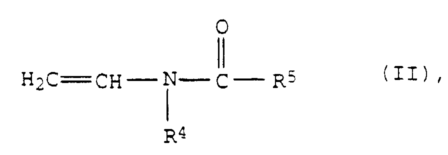 in der R⁴ und R⁵ gleich oder verschieden sind und für H, C₁-bis C₄-Alkyl stehen oder einen Ring aus 3 bis 5 Methylengruppen miteinander bilden,
   N-Vinyloxazolidon, N-Vinyltriazol, 4-Vinylpyridin-N-oxid oder Mischungen der genannten Monomeren,
b) 0 bis 89,5 Gew.-% anderen copolymerisierbaren monoethylenisch ungesättigten Monomeren und
c) 0,5 bis 30 Gew.-% mindestens eines als Vernetzer wirkenden Monomeren mit mindestens zwei ethylenisch ungesättigten, nichtkonjugierten Doppelbindungen
einer Lösungspolymerisation in Wasser und/oder polaren organischen Lösemitteln in Gegenwart von Polymerisationsreglern unterwirft, wobei man auf 1 Gew.-Teil Vernetzer 0,1 bis 5 Gew.-Teile Polymerisationsregler einsetzt.

Die so herstellbaren wasserlöslichen Copolymerisate werden als Zusatz zu Wasch- und Reinigungsmitteln verwendet.

Die erfindungsgemäßen Copolymerisate enthalten als Monomere der Gruppe (a) wasserlösliche heterocyclische Monomere der Formel 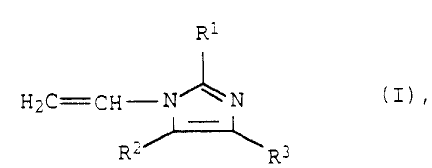 in der R¹, R² und R³ gleich sind und für H stehen, Monomer der Gruppe (a) sind beispielsweise 1-Vinylimidazol und außerdem Verbindungen der Formel

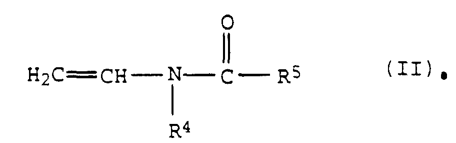

Die Substituenten R⁴ und R⁵ bedeuten H, C₁- bis C₄-Alkyl. Sie können auch miteinander einen Ring aus 3 bis 5 Methylengruppen bilden. Verbindungen der Formel II sind beispielsweise N-Vinylformamid, N-Vinylacetamid, N-Methyl-N-vinylacetamid, N-Vinylpyrrolidon, N-Vinylpiperidon oder N-Vinylcaprolactam. Von den Verbindungen der Formel II wird N-Vinylpyrrolidon besonders bevorzugt. Weitere geeignete Verbindungen der Gruppe (a) sind N-Vinyloxazolidon, N-Vinyltriazol und 4-Vinylpyridin-N-oxid. Selbstverständlich ist es auch möglich, Mischungen der genannten Monomeren bei der Copolymerisation einzusetzen. Bevorzugte eingesetzte Monomere der Gruppe (a) sind 1-Vinylimidazol, N-Vinylpyrrolidon sowie Mischungen der genannten Monomeren. Die erfindungsgemäßen Copolymerisate enthalten die Monomeren der Gruppe (a) in einer Menge von mindestens 10 Gew.-%, üblicherweise Mengen von 20 bis 99,5 und vorzugsweise 50 bis 99 Gew.-%. Für die meisten praktischen Anwendungen werden solche Copolymerisate bevorzugt, die 85 bis 98 Gew.-% der Monomeren (a) einpolymerisiert enthalten.

Die erfindungsgemäßen Copolymerisate können gegebenenfalls andere copolymerisierbare monoethylenisch ungesättigte Monomere enthalten. Solche Monomere, die allein oder in Mischung untereinander bei der Copolymerisation eingesetzt werden können, sind beispielsweise (Meth)Acrylester wie Methyl-, Ethyl-, Hydroxyethyl-, Propyl-, Hydroxypropyl-, Butyl, Ethylhexyl-, Decyl-, Lauryl-, i-Bornyl-, Cetyl-, Palmityl-, Phenoxyethyl- oder Stearylacrylat oder die entsprechenden Methacrylate, (Meth)Acrylamide wie Acrylamid, N-Methylol-acrylamid, N-tert.-Butylacrylamid, N-tert.-Octylacrylamid, N-Undecylacrylamid oder die entsprechenden Methacrylamide, Vinylester mit 2 bis 30, insbesondere 2 bis 14 Kohlenstoffatomen im Molekül wie Vinylacetat, Vinylpropionat, Vinyllaurat, Neooctansäurevinylester, Neononansäurevinylester, Neodecansäurevinylester, Styrol, Vinyltoluol, α-Methylstyrol, ungesattigte Carbonsäuren wie Acrylsäure, Methacrylsäure, Crotonsäure, Maleinsäure, Fumarsäure, Itaconsäure oder ihre entsprechenden Anhydride, 2-Acrylamido-2-methylpropansulfonsäure.

Als Monomere (b) sind ebenfalls (Meth)acrylsäureester geeignet, die sich von Aminoalkoholen ableiten. Diese Monomere enthalten ein basisches Stickstoffatom. Sie werden entweder in Form der freien Basen oder in neutralisierter oder quaternisierter Form eingesetzt. Weitere bevorzugte Monomere sind Monomere, die ein basisches Stickstoffatom und eine Amidgruppe im Molekül enthalten. Beispiele für die genannten bevorzugt in Betracht kommenden Monomeren sind N,N-Dialkylaminoalkylmethacrylate, z.B. Dimethylaminoethylacrylat, Dimethylaminoethyl(meth)acrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat. Basische Monomere, die zusätzlich eine Amidgruppierung im Molekül enthalten, sind N,N'-Dialkylaminoalkyl(meth)acrylamide, beispielsweise N,N'-Di-C₁- bis C₃-alkylamino-C₂- bis C₆-alkyl(meth)acrylamide, wie beispielsweise Dimethylaminoethylacrylamid, Dimethylaminoethylmethacrylamid, Diethylaminoethylacrylamid, Diethylaminoethylmethacrylamid, Dimethylaminopropylacrylamid und Dimethylaminopropylmethacrylamid.

Weitere Monomere, die ein basisches Stickstoffatom haben, sind 4-Vinylpyridin, 2-Vinylpyridin, Diallyldi-(C₁- bis C₁₂-alkyl)ammonium-Verbindungen und Diallyl-C₁- bis C₁₂-alkylamine. Die basischen Monomere werden bei der Copolymerisation in Form der freien Basen, der Salze mit organischen oder anorganischen Säuren oder in quaternierter Form eingesetzt. Für die Quaternierung eignen sich beispielsweise Alkylhalogenide mit 1 bis 18 C-Atomen in der Alkylgruppe, beispielsweise Methylchlorid, Ethylchlorid oder Benzylchlorid. Die Quaternierung der stickstoffhaltigen basischen Monomeren kann auch durch Umsetzung mit Dialkylsulfaten, insbesondere mit Diethylsulfat oder Dimethylsulfat, vorgenommen werden. Beispiele für quaternierte Monomere sind Trimethylammoniumethylmethacrylatchlorid, Dimethylethylammoniumethylmethacrylatethylsulfat und Dimethylethylammoniumethylmethacrylamidethylsulfat. Außerdem eignen sich 1-Vinylimidazolium-Verbindungen, die beispielsweise mit C₁- bis C₁₈-Alkylhalogeniden, Dialkylsulfaten oder Benzylchlorid quaterniert oder mit einer Säure in die Salzform überführt sind. Solche Monomere können beispielsweise mit Hilfe der allgemeinen Formel 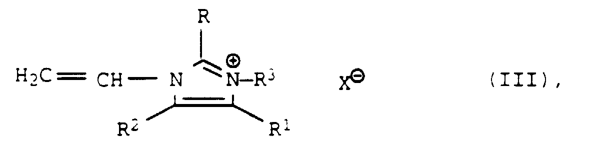 in der
- R,R¹,R² =: H, C₁- bis C₄-Alkyl oder Phenyl,
- R³ =: H, C₁ bis C₁₂-Alkyl oder Benzyl und
- X^{⊖}: ein Anion ist,
charakterisiert werden. In Formel III kann das Anion ein Halogenion, ein Alkylsulfatanion oder auch der Rest einer anorganischen oder organischen Säure sein. Beispiele für quaternierte 1-Vinylimidazole der Formel III sind 3-Methyl-1-vinylimidazoliumchlorid, 3-Benzyl-1-vinylimidazoliumchlorid oder 3-Ethyl-1-vinylimidazoliumethylsulfat. Selbstverständlich können auch die Polymerisate, die 1-Vinylimidazole der Formel I enthalten, durch Umsetzung mit üblichen Quaternisierungsmitteln wie Dimethylsulfat oder Methylchlorid teilweise quaternisiert werden.

Als Monomere der Gruppe (b) werden solche Verbindungen bevorzugt, die sich bei einer Temperatur von 25°C in Wasser zu mehr als 5 Gew.-% lösen. Falls die Copolymerisate Monomere der Gruppe (b) enthalten, so können sie in Mengen bis zu 89,5, vorzugsweise bis zu 49,5 Gew.-% darin in einpolymerisierter Form vorhanden sein.

Die Copolymerisate enthalten zwingend einen Vernetzer einpolymerisiert. Vernetzer sind Verbindungen mit mindestens 2 ethylenisch ungesättigten, nichtkonjugierten Doppelbindungen im Molekül.

Geeignete Vernetzer sind zum Beispiel Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen. Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-cyclohexandiol, 1,4-cyclohexandiol, 1,4-Bis(hydroxymethyl)cyclohexan, Hydroxypivalinsaure-neopentylglycolmonoester, 2,2-Bis(4-hydroxyphenyl)propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiopentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Triethoxycyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten C₃- bis C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellitsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet sind außerdem geradkettig oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z.B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 - 20 000. Als Vernetzer sind ferner geeignet die Acrylsäureamide, Methacrylsäureamide und N-Allylamine von mindestens zweiwertigen Aminen. Solche Amine sind zum Beispiel 1,2-Diaminomethan, 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren wie Acrylsäure, Methacrylsäure, Itaconsäure, Maleinsäure, oder mindestens zweiwertigen Carbonsäuren, wie sie oben beschrieben wurden.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid.

Weitere geeignete Vernetzer sind Divinyldioxan, Tetraallylsilan oder Tetravinylsilan. Selbstverständlich können auch Mischungen der vorgenannten Verbindungen eingesetzt werden.

Vorzugsweise werden solche Vernetzer eingesetzt, die in der Monomermischung löslich sind. Besonders bevorzugt eingesetzte Vernetzer sind beispielsweise Methylenbisacrylamid, Di- und Triallylamin, Divinylimidazol, N,N'-Divinylethylenharnstoff, Umsetzungsprodukte mehrwertiger Alkohole mit Acrylsäure oder Methacrylsäure, Methacrylsäureester und Acrylsäureester von Polyalkylenoxiden oder mehrwertigen Alkoholen, die mit Ethylenoxid und/oder Propylenoxid und/oder Epichlorhydrin umgesetzt worden sind. Ganz besonders bevorzugt als Vernetzer sind Methylenbisacrylamid, N,N'-Divinylethylenharnstoff und Acrylsäureester von Glykol, Butandiol, Trimethylolpropan oder Glycerin oder Acrylsaureester von mit Ethylenoxid und/oder Epichlorhydrin umgesetzten Glykol, Butandiol, Trimethylolpropan oder Glycerin.

Die Vernetzer sind in den Copolymerisaten in Mengen von 0,5 bis 30, vorzugsweise 1 bis 20 Gew.-% in einpolymerisierter Form enthalten. Die meisten bisher hergestellten erfindungsgemäßen Copolymerisate enthalten vorzugsweise 2 bis 15 Gew.-% der Vernetzer einpolymerisiert

Die Monomeren (a) und gegebenenfalls (b) und (c) werden nach Art einer Lösungspolymerisation in Wasser und/oder polaren organischen Lösemitteln copolymerisiert. Geeignete polare organische Lösemittel sind beispielsweise mit Wasser mischbare Verbindungen wie Tetrahydrofuran, N-Methylpyrrolidon, Dioxan, Dimethylsulfoxid, Aceton, Glykole wie Ethylenglykol, Propylenglykol, Butandiol-1,4,diethylenglykol, Triethylenglykol, Tetraethylenglykol sowie Blockcopolymerisate aus Ethylenoxid und Propylenoxid sowie veretherte Polyalkylenglykole, die beispielsweise durch Alkylierung von Alkylenglykolen und Polyalkylenglykolen erhältlich sind. Geeignet sind beispielsweise die C₁- bis C₄-Alkylendgruppen enthaltenden Glykole oder Polyethylenglykole. Die Veretherung kann ein- oder auch beidseitig erfolgen. Weitere geeignete Lösemittel sind Alkohole mit 1 bis 4 Kohlenstoffatomen oder Aceton. Man kann entweder ein einziges Lösemittel einsetzen oder die Copolymerisation auch in Gegenwart von Lösemittelmischungen durchführen. Besonders bevorzugte Lösemittel sind Wasser, C₁- bis C₃-Alkohole wie Methanol, Ethanol, Isopropanol und n-Propanol sowie Mischungen der genannten Lösemittel. Die Lösemittel werden üblicherweise in einer solchen Menge eingesetzt, daß man Copolymerisat-Lösungen mit einem Copolymerisat-Gehalt von 5 bis 80, vorzugsweise 10 bis 60 Gew.-% erhält.

Die Copolymerisation erfolgt in Gegenwart von Polymerisationsreglern. Geeignete Polymerisationsregler werden beispielsweise ausführlich beschrieben von K.C. Berger und G. Brandrup in J. Brandrup, E.H. Immergut, Polymer Handbook, 3. Aufl., John Wiley & Sons, New York, 1989, S. II/81 - II/141. Beispiele für Polymerisationsregler sind Halogenverbindungen wie Tetrachlormethan, Chloroform, Bromtrichlormethan, Bromoform, Allylverbindungen wie Allylalkohol oder 2,5-Diphenyl-1-hexen, Aldehyde, Ameisensäure, ihre Salze oder Ester. Bevorzugt eingesetzt werden Regler, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide, Sulfone und Mercaptoverbindungen. Folgende Polymerisationsregler werden beispielhaft genannt: Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid und Dimethylsulfoxid. Bevorzugt als Polymerisationsregler eingesetzte Verbindungen sind Mercaptoverbindungen, Dialkylsulfide, Dialkyldisulfide und/oder Diarylsulfide. Beispiele für diese Verbindungen sind Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Bei der Copolymerisation werden Mercaptoalkohole und/oder Mercaptocarbonsäuren bevorzugt als Regler eingesetzt. Um wasserlösliche Copolymerisate zu erhalten, setzt man auf 1 Gew.-Teil eines Vernetzers 0,1 bis 5, vorzugsweise 0,2 bis 2, und insbesondere 0,25 bis 1 Gew.-Teile eines Polymerisationsreglers ein.

Die Monomeren werden radikalisch nach Art einer Lösungspolymerisation copolymerisiert. Um die Copolymerisation zu initiieren, setzt man die üblicherweise bei solchen Verfahren benutzten Radikale bildenden Polymerisationsinitiatoren ein.

Solche Radikale bildenden Initiatoren sind alle üblichen Peroxi- und Azoverbindungen, beispielsweise Peroxide, Hydroperoxide und Peroxiester, wie Wasserstoffperoxid, Dibenzoylperoxid, Di-tert.-butylperoxid, tert.-Butylhydroperoxid, Diacylperoxide wie Dilauroylperoxid, Didecanoylperoxid und Dioctanoylperoxid oder Perester wie tert.-Butylperoctanoat, tert. Butylperpivalat, tert.-Amylperpivalat oder tert.-Butylperneodecanoat sowie Azoverbindungen wie 2,2'-Azobis(2-amidinopropan)dihydrochlorid, 2,2'-Azobis[2-(2-imidazolin-2-yl)propan]dihydrochlorid, 4,4'-Azo-bis(4-cyanovaleriansäure), 2,2'-Azobis(2,4-dimethylvaleronitril), 2,2'-Azobisisobutyronitril, 2,2'-Azobis(2-methylbutyronitril), Dimethyl-2,2'-azobis(isobutyrat), 2,2'-Azobis(4-methoxy-2,4-dimethylvaleronitril), 1,1'-Azobis(1-cyclohexancarbonitril), 2,2'-Azobis(2,4,4-trimethyl-pentan) oder 2-(Carbamoylazo)isobutyronitril. Man kann selbstverständlich auch Initiatormischungen oder die bekannten Redoxinitiatoren verwenden. Beispiele für Redoxinitiatoren sind Kombinationen aus mindestens einer Peroxoverbindung wie Kalium-, Natrium- oder Ammoniumpersulfat, Natriumhypochlorit, Natriumperborat, Natriumpercarbonat, Wasserstoffperoxid, tert.-Butylhydroperoxid oder Di-tert.-butylperoxid und mindestens einem Reduktionsmittel wie Ascorbinsäure, Milchsäure, Zitronensäure, Natriumsulfat, Natriumhydrogensulfit, Acetonsulfit, Natriumdithionit, Natrium-N-hydroxymethylsulfinat oder einem tertiären Amin wie Dimethylphenylamin. Vorzugsweise verwendet man solche Initiatoren, die sich in Wasser, Methanol, Ethanol oder Isopropanol zu mehr als 5 Gew.-% bei einer Temperatur von 25°C lösen. Die Initiatoren werden in den üblichen Mengen eingesetzt, beispielsweise in Mengen von 0,1 bis 5 Gew.-%, bezogen auf die zu polymerisierenden Monomeren.

Die Copolymerisation erfolgt nach den üblichen Verfahrenstechniken der Lösungspolymerisation, z.B. nach der sogenannten Batch-Polymerisation, bei der man die Monomeren (a) und (c) sowie gegebenenfalls (b), Polymerisationsregler und Initiator in einem Lösemittel vorlegt und auf die Polymerisationstemperatur erwärmt. Das Reaktionsgemisch wird bevorzugt solange bei der Polymerisationstemperatur gerührt, bis die Umsetzung der Monomeren mehr als 99,9 % beträgt. Die Zugabe der Polymerisationsinitiatoren kann bei diesen Verfahren gegebenenfalls auch erst nach Erreichen der Polymerisationstemperatur erfolgen.

Weitere Verfahrensvarianten sind Zulaufmethoden, die bevorzugt angewendet werden. Dabei werden einzelne oder alle Reaktionsteilnehmer ganz oder teilweise, absatzweise oder kontinuierlich, gemeinsam oder in getrennten Zuläufen zu einer Reaktionsmischung gegeben. So kann man beispielsweise zu einem Gemisch der Monomeren und eines Lösemittels bei der Polymerisationstemperatur innerhalb einer gegebenen Zeit eine Lösung des Polymerisationsreglers und eine Initiatorlösung kontinuierlich oder absatzweise zugeben. Es ist jedoch auch möglich, eine Mischung aus Regler und Initiator der auf Polymerisationstemperatur erwärmten Vorlage zuzudosieren. Eine andere Variante besteht darin, den Initiator unterhalb oder bei der Polymerisationstemperatur in die Vorlage zu geben und nur den Regler oder eine Lösung des Reglers nach Erreichen der Polymerisationstemperatur innerhalb eines vorgegebenen Zeitraums dem Reaktionsgemisch zuzuführen. In einer weiteren Variante werden zu einem Gemisch aus Regler, Monomeren (a) und gegebenenfalls Monomeren (b) und einem Lösemittel der Initiator und der Vernetzer (c) nach Erreichen der Polymerisationstemperatur zugegeben. Man kann auch die Vorlage auf Polymerisationstemperatur erwärmen und dann Regler, Initiator und Monomere (c) in getrennten Zuläufen oder gemeinsam zugeben. Selbstverständlich konnen auch Regler, Initiator, Monomere (c) und Monomere (a) und gegebenenfalls Monomere (b) zu einer auf Polymerisationstemperatur erwärmten Vorlage gegeben werden. Vorzugsweise verwendet man Wasser oder ein Gemisch aus Wasser und mindestens einem Teil der Monomeren (a) und gegebenenfalls (b) sowie gegebenenfalls weitere Komponenten als Vorlage. Besonders bevorzugt ist hierbei eine Verfahrensweise, bei der die Polymerisationsregler während der Polymerisation der Monomeren kontinuierlich oder portionsweise zudosiert werden.

Die Konzentration der Monomeren im Reaktionsmedium beträgt üblicherweise 10 bis 60 und liegt vorzugsweise in dem Bereich von 20 bis 45 Gew.-%. Die Polymerisation wird so geführt, daß eine sichtbare Vergelung des Reaktionsansatzes unterbleibt. Sofern Gelteilchen entstehen sollten, haben diese einen Durchmesser von weniger als 1 mm, vorzugsweise weniger als 500 nm, bestimmt durch Streulichtmessung im gewählten Reaktionsmedium. Die entstehenden Copolymerisate sind in dem Reaktionsmedium homogen löslich. Sie besitzen K-Werte von 10 bis 300 (bestimmt nach H. Fikentscher in wäßriger Lösung bei 25°C und einer Polymerkonzentration von 1 Gew.-%).

Die Polymerisationstemperaturen liegen üblicherweise in dem Bereich von 30 bis 150, vorzugsweise von 50 bis 120°C.

Die Herstellung von Polymerisaten, die 4-Vinylpyridin-N-oxid (formal) einpolymerisiert enthalten, erfolgt bevorzugt durch Copolymerisation von 4-Vinylpyridin und anschließende N-Oxidation des Pyridinrings mit z.B. in situ hergestellter Peressigsäure.

Die bei der Polymerisation entstandenen Mischungen können im Anschluß an den Polymerisationsprozeß einer physikalischen oder chemischen Nachbehandlung unterworfen werden. Solche Verfahren sind beispielsweise die bekannten Verfahren zur Restmonomerenreduzierung wie z.B. die Nachbehandlung durch Zusatz von Polymerisationsinitiatoren oder Mischungen mehrerer Polymerisationsinitiatoren bei geeigneten Temperaturen oder Erhitzen der Polymerisationslösung auf Temperaturen oberhalb der Polymerisationstemperatur, eine Nachbehandlung der Polymerlösung mittels Wasserdampf oder Strippen mit Stickstoff oder Behandeln der Reaktionsmischung mit oxidierenden oder reduzierenden Reagenzien, Adsorptionsverfahren wie die Adsorption von Verunreinigung an ausgewählten Medien wie z.B. Aktivkohle oder eine Ultrafiltration. Es können sich auch die bekannten Aufarbeitungsschritte anschließen, beispielsweise geeignete Trockenverfahren wie Sprüh-, Gefrier- oder Walzentrocknung oder an die Trocknung anschließende Agglomerationsverfahren. Die nach dem erfindungsgemäßen Verfahren erhaltenen restmonomerenarmen Mischungen können auch direkt in den Handel gebracht werden.

Die Copolymeren werden beispielsweise als Additiv für pharmazeutische oder kosmetische Zubereitungen, als Klebstoffzusatz, als Additiv bei der Papierherstellung, zur Stabilisierung von Enzymen oder zur Adsorption von Metallionen, Farbstoffen oder Säuren verwendet. Besonders bevorzugt ist die Verwendung als Zusatz zu Waschmitteln. Die Copolymeren bewirken beim Waschen von gefärbten und weißen Textilien eine Inhibierung der Farbstoffübertragung auf die nichtgefärbten Textilien. Insbesondere die vernetzten Copolymere aus N-Vinylimidazol und N-Vinylpyrrolidon sind für die Verwendung in Vollwaschmitteln besonders geeignet, weil sie bei geringen Farbstoffkonzentrationen in der Waschflotte deutlich besser wirksam sind als lösliche Polymere. In der Vollwäsche wird aber in der Regel hauptsächlich weißes und gering gefärbtes Waschgut sowie sehr waschecht gefärbtes Waschgut gewaschen. Waschgut, das in hohem Maße Farbstoff abgibt, ist in der Regel nur durch ein versehen und damit in einem sehr kleinen Anteil im Waschgut enthalten, z.B. wenn eine farbige Socke mitgewaschen wird. Die vernetzten Copolymeren, die geringe Mengen Farbstoff deutlich starker binden als wasserlösliche Farbübertragungsinhibitoren, haben daher gegenüber den wasserlöslichen Produkten einen großen Vorteil in der Anwendung.

Die Waschmittel können pulverförmig sein oder auch in flüssiger Einstellung vorliegen. Die Zusammensetzung der Wasch- und Reinigungsmittel kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den U.S.A. und in Japan gebräuchlich sind, findet man beispielsweise in Chemical and Engn. News, Band 67, 35 (1989) tabellarisch dargestellt. Weitere Angaben über die Zusammensetzung von Wasch- und Reinigungsmitteln können Ullmanns Enzyklopädie der technischen Chemie, Verlag Chemie, Weinheim 1983, 4. Auflage, Seiten 63 bis 160, entnommen werden. Die Waschmittel können gegebenenfalls noch ein Bleichmittel enthalten, z.B. Natriumperborat oder Natriumpercarbonat, das im Fall seines Einsatzes in Mengen bis zu 30 Gew.-% in der Waschmittelformulierung enthalten sein kann. Die Wasch- oder Reinigungsmittel können gegebenenfalls weitere übliche Zusätze enthalten, z.B. Komplexbildner, Trübungsmittel, optische Aufheller, Enzyme, Parfümöle, andere Farbübertragungsinhibitoren, Vergrauungsinhibitoren, Soil-Release-Polymere und/oder Bleichaktivatoren. Sie enthalten die erfindungsgemäßen Copolymeren in Mengen von 0,1 bis 10, vorzugsweise 0,2 bis 3 Gew.-%.

Die K-Werte der Copolymerisate wurden bestimmt nach H. Fikentscher, Cellulose-Chemie, Band 13, 58 - 64 und 71 - 74 (1932) in wäßriger Lösung bei 25°C und einer Polymerkonzentration von 1 Gew.-%. Die Prozentangaben in den Beispielen bedeuten Gewichtsprozent.

### Beispiele

### Beispiel 1

In einer 1-l-Rührapparatur wurden 400 ml Wasser, 50 g N-Vinylpyrrolidon und 50 g Vinylimidazol unter Rühren mit einem Ankerruhrer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 0,3 g Mercaptoethanol in 30 g Isopropanol und parallel ein zweiter Zulauf aus 2 g Divinylethylenharnstoff in 30 ml Isopropanol während 1,5 Stunden zugegeben. Der Reaktionsansatz wurde noch weitere 3 Stunden bei dieser Temperatur gerührt. Der Isopropylalkohol wurde anschließend mit Hilfe einer Wasserdampfdestillation aus dem Reaktionsgemisch entfernt. Man erhielt eine klare, geruchsarme Polymerlösung mit einem Feststoffgehalt von 18,6 % und einem K-Wert von 23,3.

### Beispiel 2

In einer 1-l-Rührapparatur wurden 400 ml Wasser, 100 g N-Vinylpyrrolidon unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 2,5 g Mercaptoethanol in 30 g i-Propanol und parallel ein zweiter Zulauf aus 8 g N,N'-Divinylethylenharnstoff in 70 ml i-Propanol während 1,9 Stunden zugegeben. Der Reaktionsansatz wurde noch weitere 2 Stunden bei dieser Temperatur gerührt. Der Isopropylalkohol wurde anschließend mit Hilfe einer Wasserdampfdestillation aus dem Reaktionsgemisch entfernt. Man erhielt eine farblose, klare, geruchsarme Polymerlösung mit einem Feststoffgehalt von 17,1 % und einem K-Wert von 40,4. Durch gaschromatographische Analyse konnte kein N-Vinylpyrrolidon mehr in der Reaktionsmischung nachgewiesen werden.

### Beispiel 3

In einer 1-l-Rührapparatur wurden 400 ml Wasser unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 2 g Mercaptoethanol in 30 g i-Propanol und parallel ein zweiter Zulauf aus 6 g Methylenbisacrylamid, 50 g N-Vinylpyrrolidon und 50 g 1-Vinylimidazol während 2 Stunden zugegeben. Der Reaktionsansatz wurde noch weitere 3,5 Stunden bei dieser Temperatur gerührt. Der Isopropylalkohol wurde anschließend mit Hilfe einer Wasserdampfdestillation aus dem Reaktionsgemisch entfernt. Man erhielt eine hellgelbe, klare, geruchsarme Polymerlösung mit einem Feststoffgehalt von 18,3 % und einem K-Wert von 22,0.

### Beispiel 4

In einer 1-l-Rührapparatur wurden 400 ml Wasser, 50 g N-Vinylpyrrolidon und 50 g 1-Vinylimidazol unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 2 g Mercaptoethanol in 30 g i-Propanol und parallel ein zweiter Zulauf aus 4 g Divinylethylenharnstoff in 30 ml i-Propanol während 1,75 Stunden zugegeben. Der Reaktionsansatz wurde noch weitere 3,5 Stunden bei dieser Temperatur gerührt. Der Isopropylalkohol wurde anschließend mit Hilfe einer Wasserdampfdestillation aus dem Reaktionsgemisch entfernt. Man erhielt eine hellgelbe, geruchsarme Polymerlösung mit einem Feststoffgehalt von 18,8 % und einem K-Wert von 36,8.

### Beispiel 5

In einer 1-l-Rührapparatur wurden 400 ml Wasser, 50 g N-Vinylpyrrolidon und 50 g 1-Vinylimidazol unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 5 g Mercaptoethanol in 30 g i-Propanol und parallel ein zweiter Zulauf aus 10 g Divinylethylenharnstoff in 70 ml i-Propanol während 1,85 Stunden zugegeben. Der Reaktionsansatz wurde noch weitere 3,5 Stunden bei dieser Temperatur gerührt. Der Isopropylalkohol wurde anschließend mit Hilfe einer Wasserdampfdestillation aus dem Reaktionsgemisch entfernt. Man erhielt eine klare, geruchsarme Polymerlösung mit einem Feststoffgehalt von 21,5 % und einem K-Wert von 24,9.

Eine Molekulargewichtsbestimmung durch Kleinwinkel-Lichtstreuung in 0,1 n NaCl-Lösung ergab einen Wert von M_{w}=78 000. Zum Vergleich wurde ein Copolymer aus N-Vinylpyrrolidon und 1-Vinylimidazol im Gewichtsverhältnis 1:1 und mit einem K-Wert von 24,4, das ohne Zusatz von N,N'-Divinylethylenharnstoff hergestellt worden war, untersucht. Man erhielt einen Wert von M_{w}=19 000. Der Vergleich beider Werte unterstreicht den verzweigten Charakter des erfindungsgemäßen Polymers.

### Beispiel 6

In einer 1-l-Rührapparatur wurden 400 ml Wasser und 100 g 1-Vinylimidazol unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-amidinopropan)-dihydrochlorid und 5 g Mercaptoethanol in 30 g Wasser und parallel ein zweiter Zulauf aus 8 g Triethylenglykoldiacrylat in 50 ml Wasser während 2 Stunden zugegeben. Der Reaktionsansatz wurde noch weitere 3 Stunden bei dieser Temperatur gerührt. Anschließend wurde das Reaktionsgemisch einer Wasserdampfdestillation unterworfen. Man erhielt eine hellgelbe, geruchsarme Polymerlösung mit einem Feststoffgehalt von 18,9 % und einem K-Wert von 21,4.

### Beispiel 7

In einer 1-l-Rührapparatur wurden 400 ml Wasser und 50 g Vinylpyrrolidon und 50 g 1-Vinylimidazol unter Rühren mit einem Ankerrührer bei 200 Umdrehungen/min im Stickstoffstrom auf 80°C aufgewärmt. Bei dieser Temperatur wurde ein erster Zulauf aus 1 g 2,2'-Azobis(2-methylbutyronitril) und 1 g Mercaptoethanol in 30 g Isopropanol und parallel ein zweiter Zulauf aus 2 g Divinylethylenharnstoff in 30 ml Isopropanol während 1,5 Stunden zugegeben. Der Reaktionsansatz wurde noch weitere 3 Stunden bei dieser Temperatur gerührt. Das Isopropanol wurde anschließend mit Hilfe einer Wasserdampfdestillation aus dem Reaktionsgemisch entfernt. Man erhielt eine klare, geruchsarme Polymerlösung mit einem Feststoffgehalt von 27,8 % und einem K-Wert von 52,3.

### Vergleichsbeispiel 1

In einer 1-l-Rührapparatur wurden 400 ml Wasser, 50 g N-Vinylpyrrolidon und 50 g Vinylimidazol unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 30 g Isopropanol und parallel ein zweiter Zulauf aus 2 g N,N'-Divinylethylenharnstoff in 30 ml Isopropanol während 1,5 Stunden zugegeben. 45 min nach Beginn der Zuläufe war der Ansatz vollständig vergelt.

### Vergleichsbeispiel 2

In einer 1-l-Rührapparatur wurden 400 ml Wasser, 50 g N-Vinylpyrrolidon und 50 g Vinylimidazol unter Rühren mit einem Ankerrührer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 0,2 g Mercaptoethanol in 30 g Isopropanol und parallel ein zweiter Zulauf aus 2,5 g N,N'-Divinylethylenharnstoff in 30 ml Isopropanol während 1,5 Stunden zugegeben. Der Ansatz vergelt noch während der Zudosierung der Zuläufe.

### Vergleichsbeispiel 3

In gleicher Weise wie Beispiel 2 wurde ein Versuch unter Verwendung von 0,75 g Mercaptoethanol durchgeführt. Man erhielt eine wäßrige Suspension grober Gelteilchen.

### Vergleichsbeispiel 4

In einer 1-l-Rührapparatur wurden 400 ml Wasser unter Rühren mit einem Ankerruhrer bei 200 Umdrehungen/min im Stickstoffstrom auf 80°C aufgewärmt. Bei dieser Temperatur wurde ein erster Zulauf aus 2 g 2,2'-Azobis(2-methylbutyronitril) und 0,5 g Mercaptoethanol in 30 g i-Propanol und parallel ein zweiter Zulauf aus 6 g Methylenbisacrylamid, 50 g N-Vinylpyrrolidon und 50 g Vinylimidazol während 2 Stunden zugegeben. Während der Zugabe der Komponenten bildeten sich trübe Gelteilchen in der Lösung. Man erhielt schließlich eine wäßrige Suspension grober Gelteilchen.

### Anwendungstechnische Beispiele

### Prüfmethode

Weißes Baumwoll-Prüfgewebe wurde unter den in Tabelle 1 genannten Waschbedingungen und unter Zusatz des Waschmittels gemäß Tabelle 2 in Gegenwart von Farbstoff gewaschen. Der Farbstoff wurde entweder während des Waschvorgangs von Baumwolltestfärbungen abgelöst oder der Waschflotte als Farbstofflösung zugesetzt (siehe Tabelle 1).

Tabelle 1 enthält die Waschbedingungen für die Beispiele. Die Zusammensetzung der verwendeten Waschmittel ist in Tabelle 2 gegeben. Die Messung der Anfärbung des Prüfgewebes erfolgte photometrisch. Aus den an den einzelnen Prüfgeweben gemessenen Remissionswerten wurden nach dem in A. Kud, Seifen, Öle, Fette, Wachse, Band 119, 590-594 (1993) beschriebenen Verfahren die jeweiligen Farbstärken der Anfärbungen bestimmt. Aus den Farbstärken für den Versuch mit der jeweiligen Prüfsubstanz, der Farbstärke für den Versuch ohne Prüfsubstanz und der Farbstärke des Prüfgewebes vor der Wäsche wird nach dem in o.g. Literaturstelle beschriebenen Verfahren die farbübertragungsinhibierende Wirkung der Prüfsubstanz in % ermittelt (Farbübertragungsinhibierung wird dabei analog zur Vergrauungsinhibierung behandelt). Die Wirksamkeiten sind in Tabelle 3 und 4 für die verschiedenen Farbstoffe aufgeführt.

**Tabelle 1:**

| Waschbedingungen | | | |
|---|---|---|---|
| | Prüfserie 1 | | Prüfserie 2 |
| Gerät | | Launder-O-meter | |
| Zyklen | | 1 | |
| Dauer | | 30 min | |
| Temperatur | | 60°C | |
| Wasserhärte | | 3 mmol/l | |
| Farbstoffeintrag | Lösung | | Farbgewebe |
| Prüfgewebe | | 2,5 g Baumwollnessel (gebleicht) | |
| Flottenmenge | | 250 ml | |
| Waschmittel | Waschmittel A | | Waschmittel B |
| Waschmittelkonzentration | 5,0 g/l | | 4,5 g/l |

**Tabelle 2:**

| Waschmittelzusammensetzungen | | |
|---|---|---|
| Inhaltsstoffe | Waschmittel A [%] | Waschmittel B [%] |
| Lineares C₁₀/C₁₃-Alkylbenzolsulfonat-Na-Salz (50 %ig) | 7,0 | 8,6 |
| Fettalkoholsulfat-Na-Salz | - | 2,7 |
| Additionsprodukt von 7 mol Ethylenoxid an 1 mol C₁₃/C₁₅-oxoalkohol | 5,4 | - |
| Additionsprodukt von 10 mol Ethylenoxid an 1 mol C₁₃/C₁₅-oxoalkohol | - | 6,3 |
| Zeolith A | 27,5 | 55 |
| Na-citrat * 5,5 H₂O | - | 9,0 |
| Seife | 1,75 | - |
| Copolymerisat aus 70 Gew.-% Acrylsäure und 30 Gew.-% Maleinsaure, Molmasse 70 000 | 3,75 | 4,0 |
| Na-carbonat | 15,0 | 6,0 |
| Na-sulfat | 27,75 | 5,8 |
| Carboxymethylcellulose | 0,6 | 0,5 |
| Wasser | 8,85 | - |
| Testsubstanz | 1,0 | 1,0 |

Die gemäß den Beispielen hergestellten Polymeren wurden in den Waschserien 1 und 2 geprüft. Die Ergebnisse sind in den Tabelle 3 und 4 wiedergegeben.

**Tabelle 3:**

| Waschserie 1 (Prüfung mit Farbstofflösungen) | | | | |
|---|---|---|---|---|
| | Direktblau 71 | Direktschwarz 22 | Direktblau 218 | Direktorange 39 |
| Polymer 1 | 97,0 % | 95,6 % | 99,8 % | 17,4 % |
| Polymer 5 | 96,7 % | 92,8 % | 99,8 % | 14,4 % |
| Polymer 6 | 96,6 % | 88,1 % | 99,7 % | 16,4 % |
| Vergleichsbeispiel 5 (Polyvinylpyrrolidon mit K-Wert 30) | 95,6 % | 79,4 % | 25,9 % | 1,5 % |

**Tabelle 4:**

| Waschserie 2 (Prüfung mit Farbgeweben) | | | | |
|---|---|---|---|---|
| | Direktblau 71 | Direktschwarz 22 | Direktrot 212 | Direktorange 39 |
| Polymer 8 (ZK228/36) | 61,2 % | 83,4 % | 67,8 % | 40,7 % |
| Vergleichsbeispiel 6 (Polyvinylpyrrolidon mit K-Wert 30) | 45,8 % | 55,6 % | 43,8 % | 29,9 % |
| Vergleichsbeispiel 7 (Copolymer aus Vinylpyrrolidon/Vinylimidazol 1:1, K-Wert 18) | 53 5 % | 66,5 % | 67,7 % | 37,9 % |

Die Waschergebnisse der Tabelle 3 zeigen, daß die erfindungsgemäßen Copolymeren sehr gute Wirksamkeit als Farbübertragungsinhibitoren besitzen und den in Waschmittel vielfach eingesetzten Farbübertragungsinhibitor Polyvinylpyrrolidon deutlich übertreffen. Die Tabelle zeigt auch, daß die Verbesserung der Wirksamkeit bei vielen Direktfarbstoffen auftritt und nicht auf einzelne Vertreter beschränkt ist.

Die Waschergebnisse der Tabelle 4 zeigen, daß auch bei der praxisnahen Prüfung mit Farbgeweben hervorragende Wirkung als Farbübertragungsinhibitor zu beobachten ist. Auch hier werden bekannte Vergleichspolymere deutlich in der Wirkung übertroffen.

## Patentansprüche

1. Wasserlösliche Copolymerisate, die Vernetzer einpolymerisiert enthalten, dadurch gekennzeichnet, daß sie erhältlich sind durch radikalisch initiierte Lösungspolymerisation von
a) 10 bis 99,5 Gew.-% 1-Vinylimidazol, Monomere der Formel 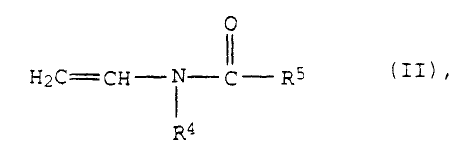 in der R⁴ und R⁵ gleich oder verschieden sind und für H, C₁- bis C₄-Alkyl stehen oder einen Ring aus 3 bis 5 Methylengruppen miteinander bilden,
N-Vinyloxazolidon, N-Vinyltriazol, 4-Vinylpyridin-N-oxid oder Mischungen der genannten Monomeren,
b) 0 bis 89,5 Gew.-% anderen copolymerisierbaren monoethylenisch ungesättigten Monomeren und
c) 0,5 bis 30 Gew.-% mindestens eines als Vernetzer wirkenden Monomeren mit mindestens zwei ethylenisch ungesättigten, nichtkonjugierten Doppelbindungen
in Wasser und/oder polaren organischen Lösemitteln in Gegenwart von Polymerisationsreglern, wobei man auf 1 Gew.-Teil Vernetzer 0,1 bis 5 Gew.-Teile Polymerisationsregier einsetzt.

2. Wasserlösliche Copolymerisate nach Anspruch 1, dadurch gekennzeichnet, daß sie als Monomere der Gruppe (a) 1-Vinylimidazol und/oder 1-Vinylpyrrolidon einpolymerisiert enthalten.

3. Verfahren zur Herstellung der wasserlöslichen Copolymerisate nach Anspruch 1, dadurch gekennzeichnet, daß man
a) 10 bis 99,5 Gew.-% 1-Vinylimidazol, Monomere der Formel 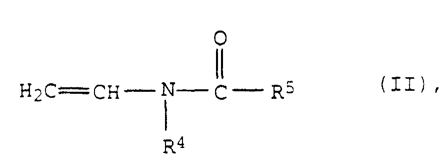 in der R⁴ und R⁵ gleich oder verschieden sind und für H, C₁- bis C₄-Alkyl stehen oder einen Ring aus 3 bis 5 Methylengruppen miteinander bilden,
N-Vinyloxazolidon, N-Vinyltriazol, 4-Vinylpyridin-N-oxid oder Mischungen der genannten Monomeren,
b) 0 bis 89,5 Gew.-% anderen copolymerisierbaren monoethylenisch ungesättigten Monomeren und
c) 0,5 bis 30 Gew.-% mindestens eines als Vernetzer wirkenden Monomeren mit mindestens zwei ethylenisch ungesättigten, nichtkonjugierten Doppelbindungen
einer Lösungspolymerisation in Wasser und/oder polaren organischen Lösemitteln in Gegenwart von Polymerisationsreglern unterwirft, wobei man auf 1 Gew.-Teil Vernetzer 0,1 bis 5 Gew.-Teile Polymerisationsregler einsetzt.

4. Verfahren nach Anspruch 3, dadurch gekennzeichnet, daß man als Polymerisationsregler organische Verbindungen einsetzt, die Schwefel in gebundener Form enthalten.

5. Verwendung der wasserlöslichen Copolymerisate nach Anspruch 1 als Zusatz zu Waschmitteln.

## Claims

1. A water-soluble crosslinked copolymer obtainable by free-radical solution polymerization of
a) 10 - 99.5% by weight of 1-vinylimidazole monomers of the formula 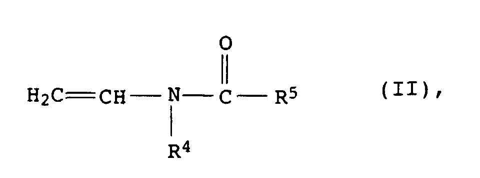 where R⁴ and R⁵ are identical or different and are H, C₁-C₄-alkyl or together form a ring of 3 to 5 methylene groups,
N-vinyloxazolidone, N-vinyltriazole, 4-vinylpyridine N-oxide or mixtures of said monomers,
b) 0 - 89.5% by weight of other copolymerizable monoethylenically unsaturated monomers and
c) 0.5 - 30% by weight of at least one monomer which acts as crosslinker and has at least two non-conjugated ethylenic double bonds
in water and/or polar organic solvents in the presence of polymerization regulators, using from 0.1 to 5 parts by weight of polymerization regulator per 1 part by weight of crosslinker.

2. A water-soluble copolymer as claimed in claim 1, which contains 1-vinylimidazole and/or 1-vinylpyrrolidone as monomer of group (a).

3. A process for preparing a water-soluble copolymer as claimed in claim 1, which comprises subjecting
a) 10 - 99.5% by weight of 1-vinylimidazole, monomers of the formula 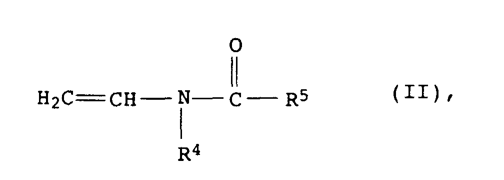 where R⁴ and R⁵ are identical or different and are H, C₁-C₄-alkyl or together form a ring of 3 to 5 methylene groups,
N-vinyloxazolidone, N-vinyltriazole, 4-vinylpyridine N-oxide or mixtures of said monomers,
b) 0 - 89.5% by weight of other copolymerizable monoethylenically unsaturated monomers and
c) 0.5 - 30% by weight of at least one monomer which acts as crosslinker and has at least two non-conjugated ethylenic double bonds
to a solution polymerization in water and/or polar organic solvents in the presence of polymerization regulators, using from 0.1 to 5 parts by weight of polymerization regulator per 1 part by weight of crosslinker.

4. A process as claimed in claim 3, wherein organic compounds which contain sulfur in bound form are used as polymerization regulators.

5. The use of a water-soluble copolymer as claimed in claim 1 as additive to detergents.

## Revendications

1. Copolymères solubles dans l'eau contenant des agents réticulants en liaison polymère, caractérisés en ce qu'ils peuvent être obtenus par polymérisation en solution à amorçage radicalaire de
a) 10-99,5% en poids de 1-vinylimidazole, de monomères de formule 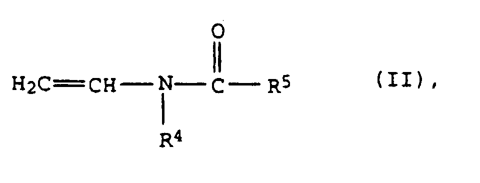 dans laquelle R⁴ et R⁵ sont identiques ou différents et sont mis pour H, un groupement alkyle en C₁-C₄ ou forment ensemble un cycle à base de 3 à 5 groupements méthylène,
de N-vinyloxazolidone, de N-vinyltriazole, de N-oxyde de 4-vinylpyridine ou des mélanges des monomères cités,
b) 0-89,5% en poids d'autres monomères copolymérisables à insaturation monoéthylénique et
c) 0,5-30% en poids d'au moins un monomère à action réticulante ayant au moins deux doubles liaisons non conjuguées à insaturation éthylénique
dans l'eau et/ou des solvants organiques polaires, en présence d'agents régulant la polymérisation, où on utilise 0,1-5 parties en poids d'agents régulant la polymérisation pour 1 partie en poids d'agent réticulant.

2. Copolymères solubles dans l'eau selon la revendication 1, caractérisés en ce qu'ils contiennent, en tant que monomères du groupe (a) du 1-vinylimidazole et/ou de la 1-vinylpyrrolidone en liaison polymère.

3. Procédé de préparation de copolymères solubles dans l'eau selon la revendication 1, caractérisé en ce que l'on soumet
a) 10-99,5% en poids de 1-vinylimidazole, des monomères de formule 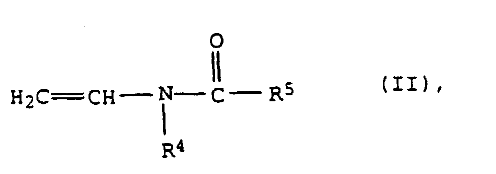 dans laquelle R⁴ et R⁵ sont identiques ou différents et sont mis pour H, un groupement alkyle en C₁-C₄ ou forment ensemble un cycle à base de 3 à 5 groupements méthylène,
de N-vinyloxazolidone, de N-vinyltriazole, de N-oxyde de 4-vinylpyridine ou des mélanges des monomères cités,
b) 0-89,5% en poids d'autres monomères copolymérisables à insaturation monoéthylénique et
c) 0,5-30% en poids d'au moins un monomère à action réticulante ayant au moins deux doubles liaisons non conjuguées à insaturation éthylénique
à une polymérisation en solution dans l'eau et/ou des solvants organiques polaires, en présence d'agents régulant la polymérisation, où on utilise 0,1-5 parties en poids d'agents régulant la polymérisation pour 1 partie en poids d'agent réticulant.

4. Procédé selon la revendication 3, caractérisé en ce que l'on utilise en tant qu'agents régulant la polymérisation, des composés organiques contenant du soufre sous forme liée.

5. Utilisation de copolymères solubles dans l'eau selon la revendication 1 en tant qu'additif pour des agents de lavage.
